# EUROPEAN PATENT APPLICATION

(11) **EP 4 645 720 A1**
(43) Date of publication of application: **05.11.2025**
(21) Application number: 25173156.8
(22) Date of filing: 29.04.2025
(51) Int. Cl.: H04J 11/00

(54) **METHOD FOR REMOTE INTERFERENCE DETECTION AND MITIGATION**

(30) Priority: 30.04.2024 IN 202441034103; 25.04.2025 US 202519190203
(71) Applicant: Mavenir Systems, Inc., Richardson, TX 75081 (US)
(72) Inventor: Yang, Roy, Buffalo Grove, IL, 60089 (US); Chandran, Ramesh, 560102 Bangalore (IN)
(74) Representative: Studio Torta S.p.A.

(57) **Abstract**

A method of mitigating remote interference caused by an aggressor base station on a victim base station in an Open Radio Access Network (O-RAN) system includes:
adjusting, by the aggressor base station, a time domain position of a first remote interference management reference signal (RIM-RS) transmission from the aggressor base station to the victim base station to ensure the transmitted RIM-RS arrives at the victim base station coincidentally with a sounding reference signal (SRS) received by the victim base station; deriving, by the victim base station based on the received first RIM-RS, an angle of arrival (AoA) of the RIM-RS received from the aggressor base station; forwarding, by the victim base station, the angle of arrival (AoA) value for the RIM-RS to a controller module; and adjusting, by the controller module, an angle of departure (AoD) of a second RIM-RS transmission from the aggressor base station.

## Description

### BACKGROUND OF THE DISCLOSURE

### 1. Field of the Disclosure

The present disclosure relates to Open Radio Access Network (O-RAN) wireless communication technology, and relates more particularly to a method for optimizing remote interference detection and mitigation.

### 2. Description of the Related Art

Remote Interference in a time division duplex (TDD) network typically refers to the condition when the downlink signal transmission interferes with the uplink signal reception, resulting in significant degradation in the uplink. In this case, the downlink signal may have travelled a long distance over a time duration that exceeds the TDD gap period and landed within the uplink time duration. One such case of remote interference is the tropospheric "ducting" where a downlink signal of a group of gNBs can travel hundreds of kilometers and interfere with the uplink of another group of gNBs. The transmitting end of the gNBs are typically referred to as the aggressors, whereas the receiving end of the gNBs are referred to as the victims. It should be noted that "ducting" (which will be explained in greater detail below) is reciprocal, i.e., the victims themselves are likely aggressors simultaneously.

Remote Interference Management Reference Signal (RIM-RS) is introduced in 3GPP Release 16 to be transmitted as a downlink signal, which RIM-RS provides a unique signature for the victim gNB to differentiate regular uplink interference from the remote downlink interference in its receiving chain.

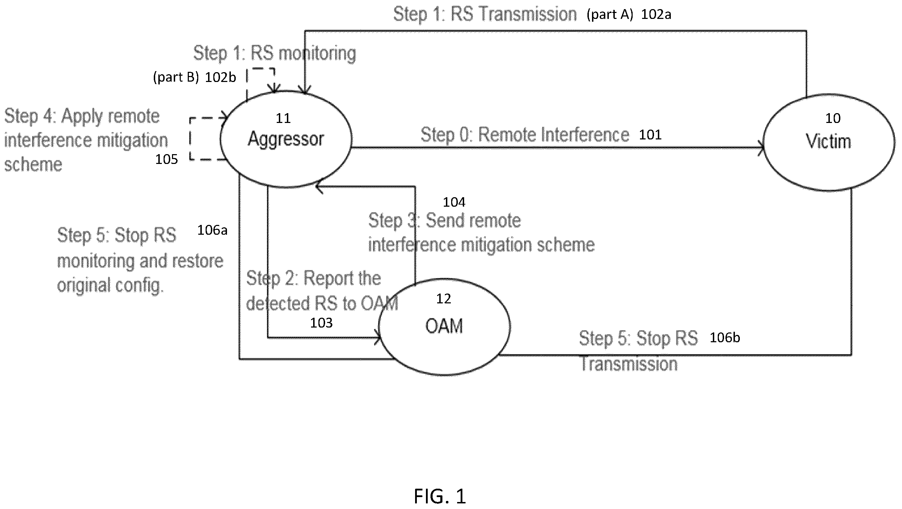

New Radio (NR) Remote Interference Mitigation Framework 0 is a centralized framework for adaptive remote interference mitigation which relies on the co-ordination of a network entity such as Operations Administration and Maintenance (OAM) module or RAN Intelligence Controller (RIC) module. As illustrated in FIG. 1, Remote Interference Mitigation Framework 0 involves the following steps:
Step 0 (process arrow 101): Atmospheric ducting phenomenon occurs, and the remote interference appears.
Step 1:
   - Part A (process arrow 102a): Victim 10 experiences remote interference and starts RIM-RS (labeled "RS" in FIG. 1) transmission.
   - Part B (process arrow 102b): Aggressor 11 starts monitoring RS (e.g., as configured by OAM module 12).
Step 2 (process arrow 103): Upon reception of RS, Aggressor 11 reports the detected RS to OAM module 12.
Step 3 (process arrow 104): OAM module 12 sends remote interference mitigation scheme to Aggressor 11.
Step 4 (process arrow 105): Aggressor 11 applies remote interference mitigation scheme.
Step 5: OAM module 12 i) stops RS monitoring and restores original configuration at Aggressor 11 (process arrow 106a), and ii) stops RS transmission from Victim 10 (process arrow 106b).

According to the existing O-RAN 7.2x fronthaul split, in the uplink for physical uplink shared channel (PUSCH), physical uplink control channel (PUCCH), and physical random access channel (PRACH) channels, the O-RU performs the beamforming by applying beamforming weights to combine the raw antenna signals into fewer number of spatial streams (i.e., dimension reduction), in other words, these raw antenna signals are port-reduced. The exception is the SRS signal, for which the raw antenna signals are not going through beamforming and are sent as they are to the O-DU, i.e., the SRS signal is non-port-reduced, and O-DU can directly access the signals received in the massive MIMO (mMIMO) antenna elements. SRS signals are typically configured by the gNB to use one or more uplink symbols in the switch slot.

In the current adaptive RIM mitigation framework, the RIM mitigation schemes are based on time and/or frequency resources interference mitigation, e.g., to leave the interfered slots/symbols un-used. This solution is often sub-optimal for various reasons, explained below.
1) Slot/symbol blanking solution may result in waste of resources, as it does not take into account the spatial-domain diversity aspect, where the ducting interference may come from a certain direction.
2) 5G NR uses mMIMO antennas and beamforming to focus the signal energy in the direction of the user. The narrow user beam itself provides a high degree of protection against the interference that comes from a different direction.
3) With user-specific beamforming, many of the users that are not in the direct path of the ducting interference may still be served normally without having to sacrifice the throughput by using fewer time/frequency resources.
4) There are known spatial schemes in 5G NR network to mitigate the interference, provided the direction (e.g., Angle of Arrival (AoA)) of the interference is known. For example, beam nulling technique is used by the 5G base station to protect the Earth Station with known location.

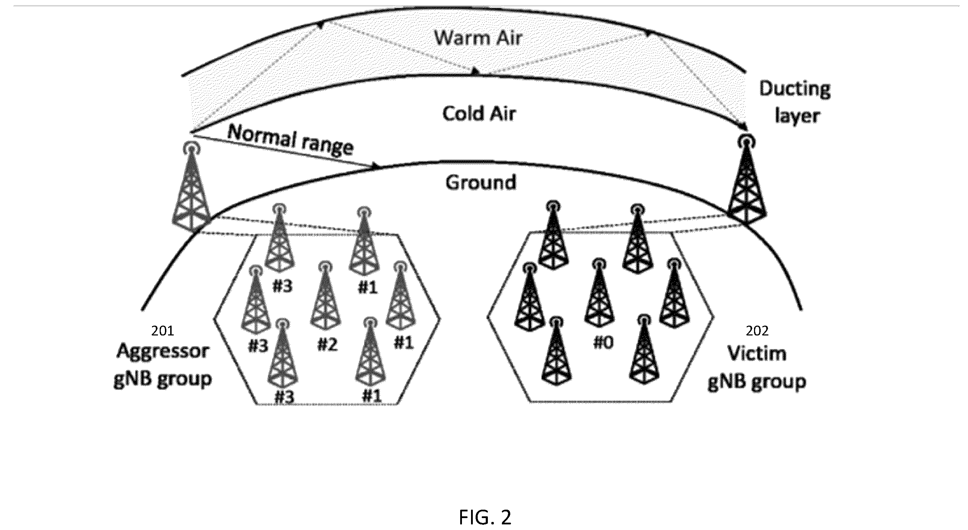

Under certain atmospheric or tropospheric conditions (e.g., temperatures and humidity), the radio signal may be highly reflective in a layer of warm air in the troposphere, the downlink signal of the aggressor network (e.g., as illustrated by aggressor gNB group 201) may travel for a long distance over the bending layer with low propagation loss and affect the uplink signal of a victim network (e.g., as illustrated by victim gNB group 202). This kind of remote interference phenomenon is referred to as ducting, as illustrated in FIG. 2.

Ducting interference may occur for a few minutes to several hours, depending on the climatic conditions and area of deployment. The severity of remote interference is measured in two dimensions: i) the severity of interference in terms of power levels; and ii) the number of upcoming slots or symbols which are affected.

An example of remote interference impact due to propagation delay for the uplink Orthogonal Frequency Division Multiplex (OFDM) symbols is presented in Table 1.

**TABLE 1**

| **Distance** | **Propagation Delay** | **Number of OFDM Symbol Impacted** |
|---|---|---|
| 25 KM | 0.0834 ms | 2.34 |
| 50 KM | 0.1668 ms | 4.68 |
| 100 KM | 0.3336 ms | 9.36 |
| 200 KM | 0.667 ms | 18.72 |
| 300 KM | 1 ms | 28.07 |

It is assumed that 30 KHz Subcarrier Spacing (ScS) and normal Cyclic Prefix (CP) are used for generating values in Table 1. For a larger distance between Aggressor and Victim gNBs, the impact of remote interference is more due to higher propagation delay which causes overlapping of Downlink and Uplink symbols.

Ducting phenomenon is largely uncontrollable, and its effects can only be mitigated by the network side. As mentioned previously, one of the known mitigation methods is avoiding the impacted time/frequency resources. According to this approach, i) the gNB may stop scheduling user traffic on the uplink slots and/or symbols where remote interference is detected, and/or ii) the gNB may stop using the Sounding Reference Signal (SRS) if it falls within the impacted slots and/or symbols. The drawback of this approach is the loss of throughput due to potentially large number of time frequency resources becoming unusable. Another drawback is that without the SRS resources, beamforming gain may be less in the near/mid cell if we switch to Channel State Information Reference Signal (CSI-RS) based beamforming.

Another one of the known mitigation methods is manually adjusting the tilt of the aggressor gNBs to mitigate the ducting, but this approach suffers from several drawbacks. First, the ducting angles may change (e.g., the height of the ducting layer may be different from one occurrence to another since the height of the cloud/moisture layer can be different), and it is difficult to find an optimal tilt that is good for all conditions. Second, the adjusted tilt may be good for mitigating ducting but may not be optimal for coverage when there is no ducting. Third, the cost associated with this approach is quite high, since the tilt usually needs to be configured during the system design phase by taking into consideration ducting and the trade-off between coverage and remote interference mitigation. Finally, the effectiveness of interference mitigation via tilting is moderate at best since it is non-adaptive.

Therefore, a need exists to provide a more efficient method of optimizing remote interference mitigation.

### SUMMARY OF THE DISCLOSURE

The present disclosure provides a method of optimizing remote interference detection and mitigation, e.g., in an O-RAN system.

According to an example embodiment, a method is provided to determine the spatial direction of the remote interference and to mitigate the remote interference spatially through interactive signaling among the aggressor base station, the victim base station and the network functions.

According to an example embodiment of the method, the aggressor base station and the victim base station collaborate such that the RIM-RS falls on the non-port-reduced resources of the O-RU and is sent to the O-DU, whereby the spatial direction of the remote interference can be determined.

According to an example embodiment of the method, the aggressor base station and the victim base station collaborate to adjust the spatial direction of the remote interference to minimize the interference between them.

According to an example embodiment of the method, the following steps are iteratively performed: i) deriving, by the victim base station, an angle of arrival (AoA) of, and a level of interference caused by, each respective Remote Interference Management Reference Signal (RIM-RS) received from the aggressor base station, and ii) adjusting by the controller module an angle of departure (AoD) of each subsequent RIM-RS transmission from the aggressor base station, until the level of interference caused by RIM-RS transmission reaches the specified minimum level.

According to an example embodiment of the method, the aggressor base stations employ spatial interference mitigation scheme including one of beam nulling or beam muting according to the finalized spatial direction of the remote interference.

According to an example embodiment of the method, the angle of departure of RIM-RS from the aggressor base station is adjusted for spatial interference mitigation.

According to an example embodiment of the method, the angle of departure adjustment can involve azimuth and/or elevation angle (in other words, vertical and/or horizontal) adjustment(s) for the RIM-RS.

### BRIEF DESCRIPTION OF THE DRAWINGS

FIG. 1 illustrates Remote Interference Mitigation Framework 0.
FIG. 2 illustrates atmospheric or tropospheric ducting.
FIG. 3 is a block diagram illustrating conventional RIM-RS transmission and detection.
FIG. 4 is a block diagram illustrating RIM-RS transmission and detection using non-port-reduced SRS.
FIG. 5 illustrates RIM-RS Detection Request and RIM Detection Response API.
FIG. 6 illustrates remote interference spatial direction optimization.
FIG. 7 illustrates the modified framework for adaptive remote interference mitigation.
FIG. 8 illustrates a signal flow diagram for an example spatial remote interference mitigation.

### DETAILED DESCRIPTION

3GPP introduced RIM-RS in Release 16, which RIM-RS has a unique time-frequency sequence pattern in comparison to other 5G NR reference signals. RIM-RS is used to i) identify the group of interfering gNBs and ii) measure the propagation delay and the interference level between the interfering gNB or a group of gNBs (i.e., Aggressor(s)) and the interfered gNB or a group of gNBs (i.e., Victim(s)).

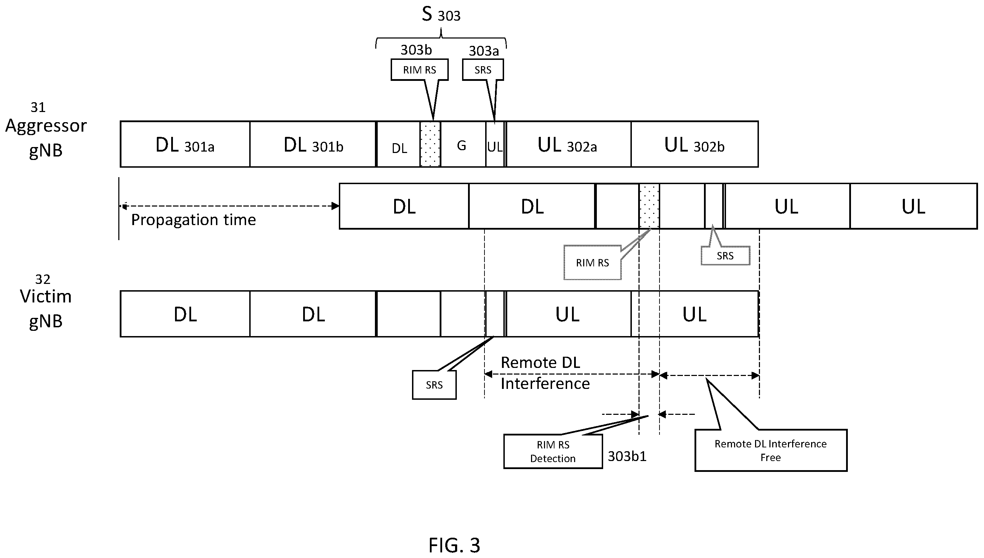

FIG. 3 is a block diagram illustrating conventional RIM-RS transmission and detection. FIG. 3 shows an example implementation of the RIM-RS detection of a TDD frame structure, which has 2 downlink (DL) slots 301a and 301b, 2 uplink (UL) slots 302a and 302b, and 1 switching (S) slot 303 where the symbols are divided in time into downlink (DL) period, guard (G) period and uplink (UL) period. The uplink symbols of the switching slot may be used for SRS 303a signal transmission, as shown in FIG. 3. The aggressor gNB 31 sends the RIM-RS 303b on the last 2 symbols of the downlink symbols in the switching slot, in which case the RIM-RS 303b is used to represent the "wavefront" of the remote interference. Over a long propagation time, the signal from the aggressor gNB 31 arrives at the victim gNB 32 and interferes with the uplink time period. In the O-DU of the victim gNB 32, the RIM-RS detection function in the uplink searches for the RIM-RS signal over a time window that starts from the uplink symbols in the switching slot and ends at the completion of the uplink slots. In FIG. 3, the RIM-RS detection function detects the RIM-RS signal at the time domain position that is labeled as "RIM-RS Detection". The propagation time can be determined as the time difference between the time domain position of detected RIM-RS ("RIM-RS Detection" 303b1) in the victim gNB 32 and the time domain position of the transmitted RIM-RS 303b at the aggressor gNB 31. The O-DU of the victim gNB 32 reports the propagation time to the network function (e.g., a controller module configured as OAM or RIC) that manages the remote interference mitigation.

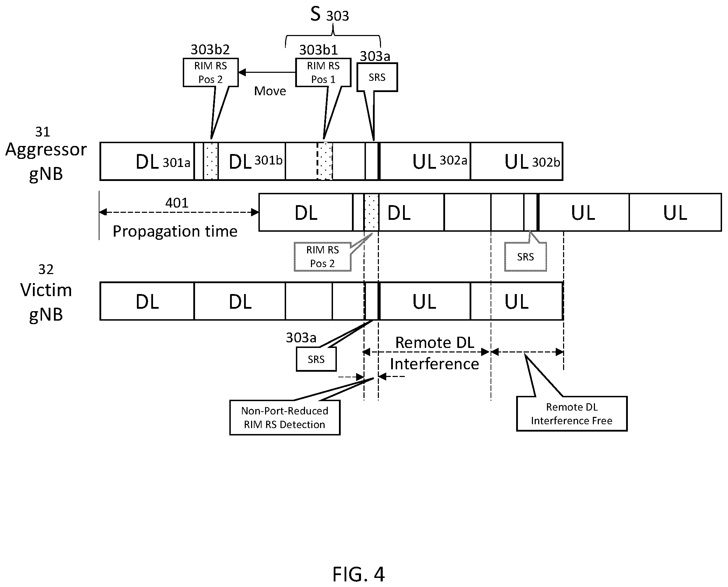

According to an example embodiment of the adaptive framework and method for remote interference mitigation, the network function (e.g., a controller module configured as OAM or RIC) that manages the remote interference mitigation is configured to send a message to the aggressor base station (e.g., referenced by gNB 31 in FIG. 4) with a time shift, which is based on previously-reported propagation time (referenced by 401 in FIG. 4) as well as the time domain position of the SRS signal (referenced by 303a in FIG. 4) in the victim gNB 32, as shown in FIG. 4. This time shift value sent by the controller module (which is not explicitly shown in FIG. 4) is used by the aggressor base station (gNB 31) to move the RIM-RS transmission position from the original position (RIM-RS Pos 1 referenced by 303b1) to a new position (RIM-RS Pos 2 referenced by 303b2), such that after the propagation time 401, the RIM-RS from the aggressor base station (gNB) 31 will land largely on top of the SRS symbol 303a reception in the victim base station (gNB) 32 (SRS is transmitted by the UE to the base station). The SRS signal in the O-RAN deployment is non-port-reduced, i.e., the signal in each antenna element will be sent to the O-DU without going through beamforming. The time-frequency resources configured for SRS signal can be used for RIM-RS signal when it is superimposed on top of the SRS signal.

After the RIM-RS transmission from the Aggressor gNB (e.g., 31 in FIG. 4) is aligned with the SRS symbol reception at the Victim gNB (e.g., 32 in FIG. 4), the RIM-RS signal received on each of the mMIMO antenna elements are forwarded to the O-DU by the O-RU through the existing NDM (non-delay managed) O-RAN fronthaul mechanism for SRS signal.

The Physical layer function (Layer 1) in the O-DU can i) perform channel estimation on the received non-port-reduced data based on the RIM-RS sequence, and ii) determine the direction of the incident RIM-RS for one or more Aggressor gNBs according to their respective RIM-RS configurations. For example, Eigen beamforming method can be used to determine the dominant direction(s) of the RIM-RS by selecting the Eigen vectors that correspond to the dominant Eigen values of the channel covariance matrix. The selected Eigen vector(s) represent the angle of the arrival of the incoming remote interference.

The Layer 1 function in the O-DU can report the AoA in addition to the existing RIM-RS detection results (e.g., time-offset and interference level) to the upper layers (e.g., Layer 2 and Layer 3), which may be subsequently forwarded to the centralized network functions that manage the remote interference mitigation, e.g., OAM and/or RAN Intelligence Controller (RIC). To implement this approach, a new field can be added to the Functional Application Platform Interface (FAPI) between Layer 1 and Layer 2 with respect to the RIM-RS report.

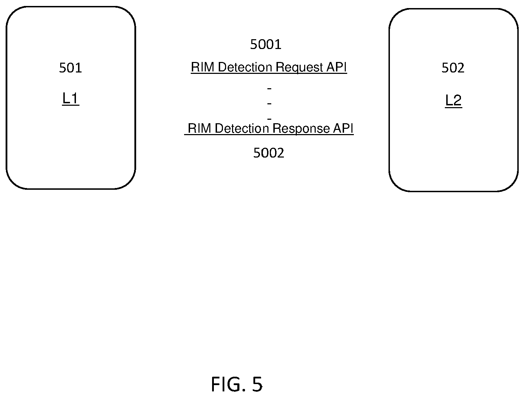

FIG. 5 illustrates RIM-RS Detection Request and RIM Detection Response API messages. As shown in FIG. 5, configuration parameters to receive RIM-RS at L1 501 is provided by RIM Detection Request API 5001 from L2 502. Upon detection of RIM-RS, the derived parameters from the reference signals will be sent to L2 502 as part of RIM Detection Response API message 5002. Furthermore, the following additional parameters related to AoA for each detected RIM-RS are provided in the RIM Detection Response API message 5002:
∘ RIM-RS [i] → Structure for detected RIM-RS index i
▪ ......
▪ Int AoA → AoA for the detected RIM-RS
▪ Int RSRP or RSSI → Detected power level for the RIM-RS under AoA direction

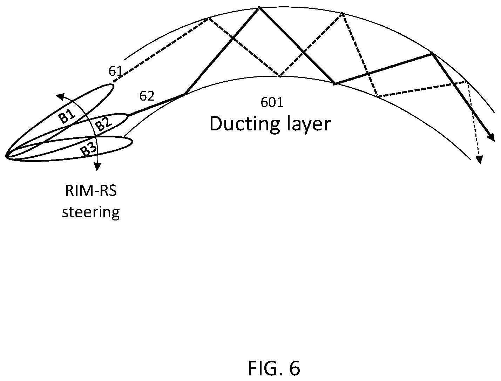

The centralized network functions that manage the remote interference mitigation, e.g., OAM and/or RIC (which is also referenced generally as a controller module), can utilize the received angle of arrival (AoA) and the interference level information to minimize the remote interference by adjusting the angle of departure (AoD) of the aggressor base station. The controller module may send a message to the aggressor base station to vertically steer the RIM-RS in progressive steps, and at the same time the victim base station can re-measure the AoA and the level of interference. The aggressor base station can apply a new set of beamforming weights to the RIM-RS signal to achieve different vertical angles. As shown in FIG. 6, when the angle of departure changes (e.g., as shown by the respective orientations of beams B1, B2 and B3), the ducting path may change (see, e.g., path 61 associated with beam B1, and path 62 associated with beam B2) and the level of remote interference may also change and may even disappear (for example, beam B3 will have very little leakage into the ducting layer 601). The aggressor base station may also reject the suggested AoD from the controller module to balance the need for cell coverage with the spatial remote interference mitigation, e.g., by sending a response message if the Aggressor gNB determines that the requested down-tilt angle is excessive. The above-described process can be performed repeatedly until the remote interference level is minimized to an optimal level (e.g., below a specified threshold), leading to the optimal AoD and AoA for the given ducting condition.

As shown in FIG. 6, the centralized controller module (e.g., OAM and/or RIC) can instruct the aggressor base station to transmit RIM-RS in different directions, and at the same time, the victim base station can measure the AoA and the interference levels. This process is iterative and can overshoot, e.g., if the controller module wants to try a set of AoDs of 70, 80, 90, 100, and 110 degrees (90 degree means the aggressor is shooting the beam parallel to earth, and 100 degree means uptilt of 10 degree, etc.), the corresponding measured interference by the victim base station would be 50 dBm, 40 dBm, 60 dBm, 30 dBm, and 55 dBm, for example. If a minimum interference threshold is set at 40 dBm, we may stop at AoD = 80, as that will satisfy the interference threshold requirement. If a minimum interference threshold is set at 10 dBm, we will not find a case that meets the threshold, and we have to finish the 5 iterations and then identify the AoD that results in the smallest interference as the optimal AoD, which is 100 degree, because 30 dBm is the minimum value amongst the 5 measured results.

If the resultant remote interference falls below an acceptable specified threshold, the remote interference can be considered as having been removed. Otherwise, once the optimal AoD and AoA directions of the remote interference are determined, the victim base station ("base stations" is used interchangeably with gNB in the present disclosure) and the aggressor base station (gNB) can implement spatial mitigation schemes, e.g., beam nulling (including common beam and user beam), beam muting or any other suitable spatial filtering techniques to suppress the impact of the remote interference. In addition, the controller module (e.g., OAM or RIC) may keep a record of the historical data, e.g., the optimal AoD and AoA to achieve the minimum interference between the group of aggressor base stations and the group of victim base stations, along with the associated recorded atmospheric data. Such data can be used to train an AI/ML model to select the optimal AoD and AoA values when the remote interference occurs again in combination with other input factors (e.g., tropospheric conditions).

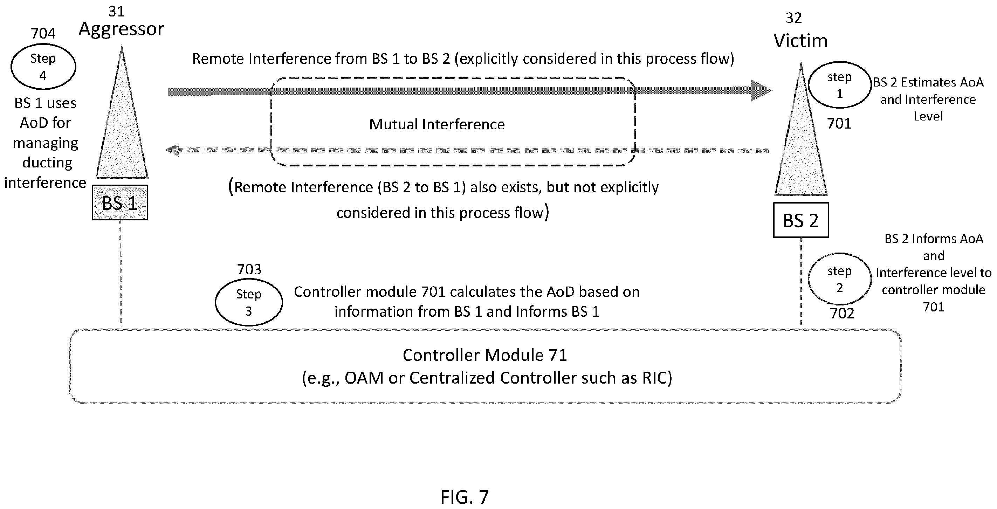

An example embodiment of the adaptive framework and method for remote interference mitigation is illustrated in FIG. 7. In the adaptive framework and method shown in FIG. 7, the remote (ducting) interference is assumed to be mutual, i.e., each of base station 1 (BS1) and base station 2 (BS2) acts as an aggressor against the other base station. However, for the sake of clarity, FIG. 7 illustrates the process flow for the adaptive framework in which BS1 is acting as the Aggressor (referenced by 31) and BS2 is the Victim (referenced by 32). Controller module 71 (e.g., OAM or centralized controller such as RIC) configures the RIM-RS parameters to BS1 and BS2. FIG. 7 illustrates the following steps for the method for remote interference mitigation:
Step 1 (as referenced by 701 in FIG. 7): BS2 (Victim), aware of RIM-RS parameters from Aggressor BS1, receives the ducting interference from the BS1 (Aggressor) and estimates the AoA of the RIM-RS and the level of interference transmitted from BS 1.
Step 2 (as referenced by 702 in FIG. 7): BS2 (Victim) informs the estimated Aggressor's RIM-RS AoA and the level of interference to the controller module 71 (e.g., OAM or centralized controller such as RIC).
Step 3 (as referenced by 703 in FIG. 7): The controller module 71 (e.g., OAM or centralized controller such as RIC) calculates the BS2 RIM-RS AoD from the AoA received from BS 2, and the controller module 71 informs the AoD to the BS1.
Step 4 (as referenced by 704 in FIG. 7): BS1 uses the AoD received from the controller module 71 (e.g., OAM or centralized controller such as RIC) for managing/mitigating the ducting interference.

The above-described process involving Steps 1-4 can be executed iteratively until the ducting interference is minimized (e.g., reaches a specified minimum level).

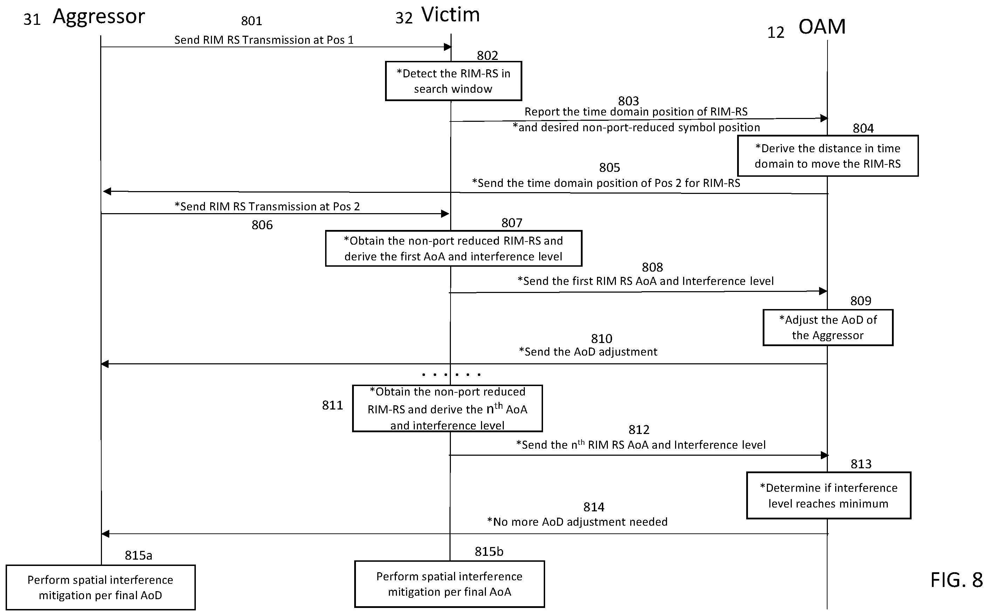

FIG. 8 illustrates a signal flow diagram for an example spatial remote interference mitigation according to the present disclosure (the overall process for which has been generally described above in connection with FIGS. 4 and 7). As shown at 801, the Aggressor BS 31 sends RIM-RS transmission at Position 1 (Pos 1) to the Victim BS 32. The Victim BS 32 detects (as shown at 802) the RIM-RS in a search window, and subsequently reports (as shown at 803) to the OAM 12 the time domain position of the detected RIM-RS and the desired non-port-reduced symbol position. Based on the received information, the OAM 12 derives the distance in time domain to move the RIM-RS (as shown at 804), and subsequently sends (as shown at 805) to the Aggressor BS 31 the time domain position for RIM-RS transmission at Position 2 (Pos 2). In response, the Aggressor BS 31 sends (as shown at 806) to the Victim BS 32 the RIM-RS transmission at Position 2. Subsequently, based on the information received from the Aggressor BS 31, the Victim BS 32 obtains the non-port-reduced RIM-RS and derives the first AoA and the interference level due to Aggressor BS 31 (as shown at 807). The Victim BS 32 sends the first RIM-RS AoA and the interference level (as shown at 808) to the OAM 12, based on which information the OAM 12 determines the adjustment to be made to the AoD of the Aggressor BS 31 (as shown at 809). The OAM 12 sends (as shown at 810) the AoD adjustment information to the Aggressor BS 31.

The above-described process steps 806-810 of FIG. 8 can be performed iteratively (i.e., repeated n number of times), as illustrated by further process steps starting with 811. As shown at 811, based on the information (RIM-RS transmission) received from the Aggressor BS 31, the Victim BS 32 obtains the non-port-reduced RIM-RS and derives the n^{th} AoA and the interference level due to Aggressor BS 31. The Victim BS 32 sends the n^{th} RIM-RS AoA and the interference level (as shown at 812) to the OAM 12, based on which information the OAM 12 determines whether the interference level has reached a specified minimum level (as shown at 813), in which case no additional AoD adjustment is deemed necessary. If it is determined that no more AoD adjustment is needed, the AOM 12 sends (as shown at 814) to the Aggressor BS 31 an indication that no more AoD adjustment is needed. Subsequently, i) the Aggressor BS 31 performs spatial interference mitigation by utilizing the final AoD adjustment information sent by the OAM 12 before the interference level reached the specified minimum level (as shown at 815a), and ii) the Victim BS 32 performs spatial interference mitigation by utilizing the final AoA derived before the interference level reached the specified minimum level (as shown at 815b). The AoD adjustment can involve vertical and/or horizontal adjustment(s) for the RIM-RS.

Several benefits and advantages are provided by the adaptive framework and method for remote interference mitigation according to the present disclosure, some of which benefits and advantages are listed below.
1) Novel ways to use RIM-RS for remote interference mitigation are provided in this disclosure.
2) The example embodiments in the present disclosure leverage SRS signal to transmit the raw RIM-RS at the antenna element domain over the FH to the DU.
3) The example embodiments in the present disclosure implement signaling to negotiate the timing of the transmitter of the RIM-RS to align with non-port-reduced signal.
4) The example embodiments in the present disclosure implement signaling to perform spatial interference optimization between the aggressor and the victim.
5) The example embodiments in the present disclosure implement the addition of L1-L2 interface variables on RIM-RS detection to indicate AoA to L2.
6) The example embodiments in the present disclosure implement beam mulling in RIM-RS detected directions as per AoA estimation.
7) The example embodiments in the present disclosure implement detection and/or reporting of interference levels to L2 based on AoA separation.
8) With the technique disclosed herein, the base stations can use beam nulling, beam muting or other spatial filtering techniques (horizontal and vertical) to mitigate and/or avoid remote interference without having to blank the entire impacted slot/symbols, which leads to higher throughput and better user experience.

The techniques described herein are exemplary and should not be construed as implying any limitation on the present disclosure. Various alternatives, combinations and modifications could be devised by those skilled in the art. For example, operations associated with the processes described herein can be performed in any order, unless otherwise specified or dictated by the operations themselves. In addition, although the example embodiments have been described in the context of O-RAN 7.2x fronthaul split, the present disclosure is equally applicable to the newer O-RAN fronthaul split called demodulation reference signal beamforming (DMRS-BF), where additional L1 processing (e.g., DMRS-based beamforming, channel estimation and/or equalization) is moved from the O-DU to the O-RU, whereby RIM-RS detection and AoA estimation can be performed at the O-RU based on non-port-reduced inputs at the antenna elements, and the results are subsequently sent to the O-DU and network entities. The present disclosure is intended to embrace all such alternatives, modifications and variances that fall within the scope of the appended claims.

The terms "comprises" or "comprising" are to be interpreted as specifying the presence of the stated features, integers, operations or components, but not precluding the presence of one or more other features, integers, operations or components or groups thereof. The terms "a" and "an" are indefinite articles, and as such, do not preclude embodiments having pluralities of articles.

For the sake of completeness, the following list of acronyms are provided:

### ACRONYMS:

AI/ML: artificial intelligence / machine learning
AoA: angle of arrival
AoD: angle of departure
CSI-RS: Channel State Information Reference Signal
gNB: next generation node B (also referred to as gNodeB)
OAM: Operations Administration and Maintenance
O-DU: O-RAN distributed unit
O-RAN: Open Radio Access Network
O-RU: O-RAN radio unit
PRACH: physical random access channel
PUCCH: physical uplink control channel
PUSCH: physical uplink shared channel
RAN: radio access network
RIC: RAN Intelligence Controller
RIM-RS: Remote Interference Management Reference Signal
RSRP: reference signal received power
RSSI: received signal strength indicator
SRS: Sounding Reference Signal

## Claims

1. A method of mitigating remote interference caused by an aggressor base station on a victim base station in an Open Radio Access Network (O-RAN) system, comprising:
adjusting, by the aggressor base station, a time domain position of a first remote interference management reference signal (RIM-RS) transmission from the aggressor base station to the victim base station to ensure the transmitted RIM-RS arrives at the victim base station coincidentally with a sounding reference signal (SRS) symbol slot at the victim base station;
deriving, by the victim base station based on the received first RIM-RS, at least an angle of arrival (AoA) of the RIM-RS received from the aggressor base station;
forwarding, by the victim base station, the angle of arrival (AoA) value for the RIM-RS to a controller module; and
adjusting, by the controller module, an angle of departure (AoD) of a second RIM-RS transmission from the aggressor base station.

2. The method according to claim 1, further comprising:
deriving, by the victim base station based on the received first RIM-RS, at least a level of interference caused by the first RIM-RS received from the aggressor base station to the victim base station.

3. The method according to claim 2, wherein the controller module transmits a target AoD of the second RIM-RS to the aggressor base station, and the aggressor base station transmits the second RIM-RS at the target AoD to mitigate the remote interference caused by the aggressor base station.

4. The method according to claim 3, wherein the target AoD is implemented by the aggressor base station by applying a new set of beamforming weights to the RIM-RS signal to achieve a vertical angle corresponding to the target AoD.

5. The method according to claim 2, further comprising:
deriving, by the victim base station based on the received second RIM-RS, an AoA of, and a level of interference caused by, the second RIM-RS received from the aggressor base station;
forwarding, by the victim base station, the AoA value and the level of interference caused by the second RIM-RS to the controller module;
determining, by the controller module, whether the level of interference caused by the second RIM-RS has reached a specified minimum level.

6. The method according to claim 5, further comprising:
in the case the level of interference caused by the second RIM-RS has reached the specified minimum level, informing the aggressor base station by the controller module of no further AoD adjustment.

7. The method according to claim 5, further comprising:
in the case the level of interference caused by the second RIM-RS has not reached the specified minimum level, adjusting by the controller module an AoD of a third RIM-RS transmission from the aggressor base station.

8. The method according to claim 7, wherein the controller module transmits a target AoD of the third RIM-RS to the aggressor base station, and the aggressor base station transmits the third RIM-RS at the target AoD to mitigate the remote interference caused by the aggressor base station.

9. The method according to claim 7, further comprising:
iteratively performing the steps of i) deriving, by the victim base station, an AoA of, and a level of interference caused by, each respective RIM-RS received from the aggressor base station, and ii) adjusting by the controller module an AoD of each subsequent RIM-RS transmission from the aggressor base station, until the level of interference caused by RIM-RS transmission reaches the specified minimum level.

10. The method according to claim 7, wherein the controller module is one of i) an operations, administration and maintenance (OAM) controller module or ii) a radio access network intelligent controller (RIC).

11. The method according to claim 6, further comprising:
performing, by the aggressor base station based on the AoD of the second RIM-RS, a spatial interference mitigation including one of beam nulling or beam muting.

12. The method according to claim 6, further comprising:
performing, by the victim base station based on the AoA of the second RIM-RS, a spatial interference mitigation including one of beam nulling or beam muting.

13. The method according to claim 11, further comprising:
performing, by the victim base station based on the AoA of the second RIM-RS, a spatial interference mitigation including one of beam nulling or beam muting.

14. The method according to claim 2, wherein the adjusting of the time domain position of the first RIM-RS transmission from the aggressor base station to the victim base station is based on i) a propagation time of a previously transmitted RIM-RS preceding the first RIM-RS between the aggressor base station and the victim base station, and ii) the time domain position of the SRS symbol slot in the victim base station.

15. The method according to claim 5, wherein the adjusting of the time domain position of the first RIM-RS transmission from the aggressor base station to the victim base station is based on i) a propagation time of a previously transmitted RIM-RS preceding the first RIM-RS between the aggressor base station and the victim base station, and ii) the time domain position of the SRS symbol slot in the victim base station.
